# EUROPEAN PATENT APPLICATION

(11) **EP 1 213 164 A2**
(43) Date of publication of application: **12.06.2002**
(21) Application number: 01128912.1
(22) Date of filing: 05.12.2001
(51) Int. Cl.: B60G 17/033, B60G 21/06

(54) **Suspension device for a four-wheeled vehicle**

(30) Priority: 06.12.2000 JP 2000370915
(71) Applicant: YAMAHA HATSUDOKI KABUSHIKI KAISHA, Iwata-shi Shizuoka-ken (JP)
(72) Inventor: Sakai, Kouji, c/o Yamaha Hatsudoki K.K., Iwata-shi, Shizuoka-ken (JP)
(74) Representative: Grünecker, Kinkeldey, Stockmair & Schwanhäusser Anwaltssozietät

(57) **Abstract**

A suspension device for a four-wheeled vehicle including hydraulic cylinders mounted, one for each wheel, to the four-wheeled vehicle, and a pressure regulating device having hydraulic chambers in communication with said hydraulic cylinders and movable partitions fitted in the hydraulic chambers for sliding movement, wherein any individual of said hydraulic chambers in said pressure regulating device is in communication, through choke members, with two of said hydraulic chambers other than one of said hydraulic chambers which is in communication with an hydraulic cylinder being located diagonal to an hydraulic cylinder which is in communication with said individual hydraulic chamber on a vehicle body.

## Description

This invention relates to a suspension device for a four-wheeled vehicle including hydraulic cylinders according to the preamble portion of claim 1.

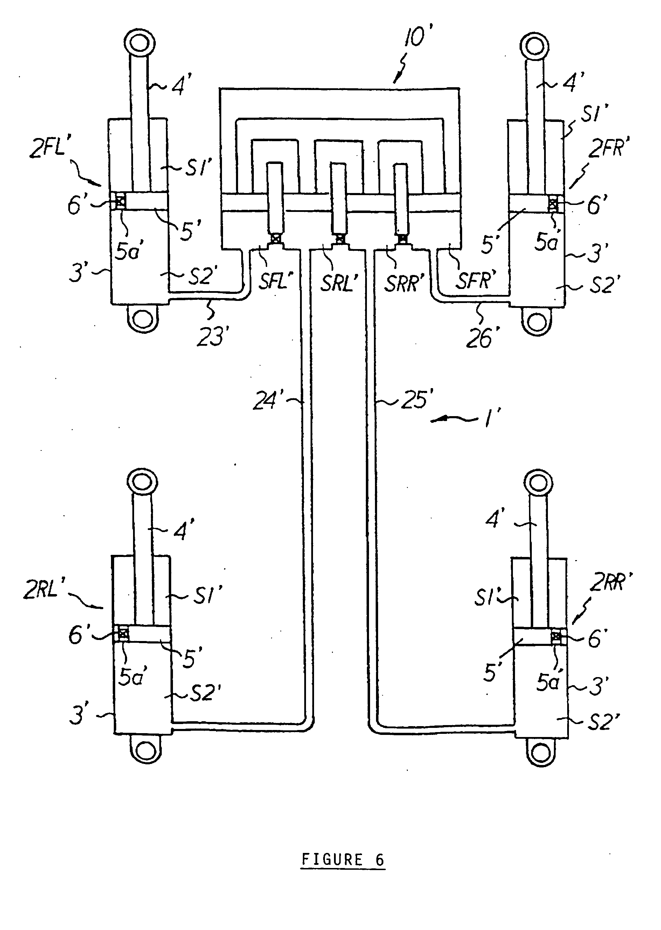

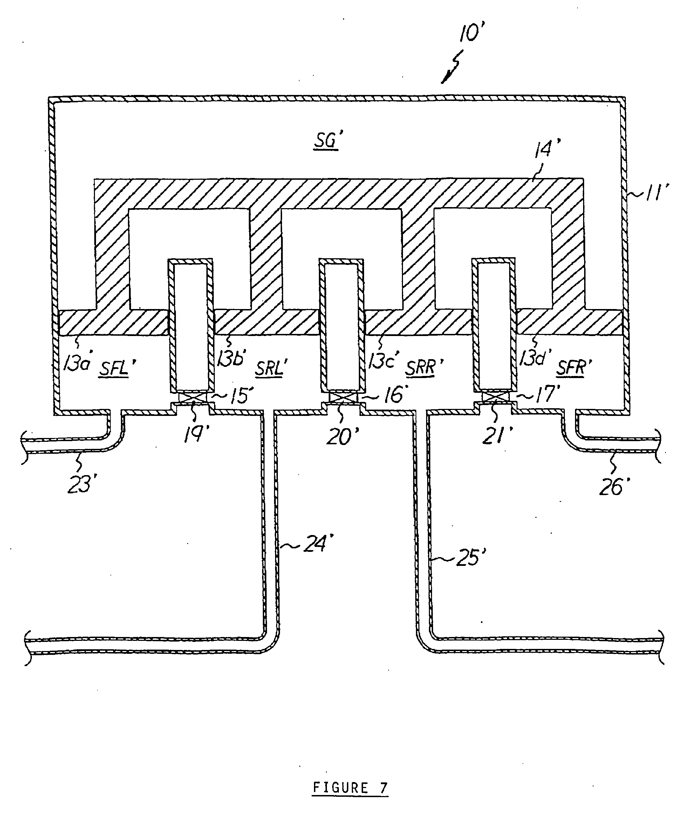

A system shown in Fig. 6 and Fig. 7 has been suggested as a suspension for restricting rolling and pitching of a four-wheeled vehicle body (Japanese Unexamined Patent Publication Hei 6-72127).

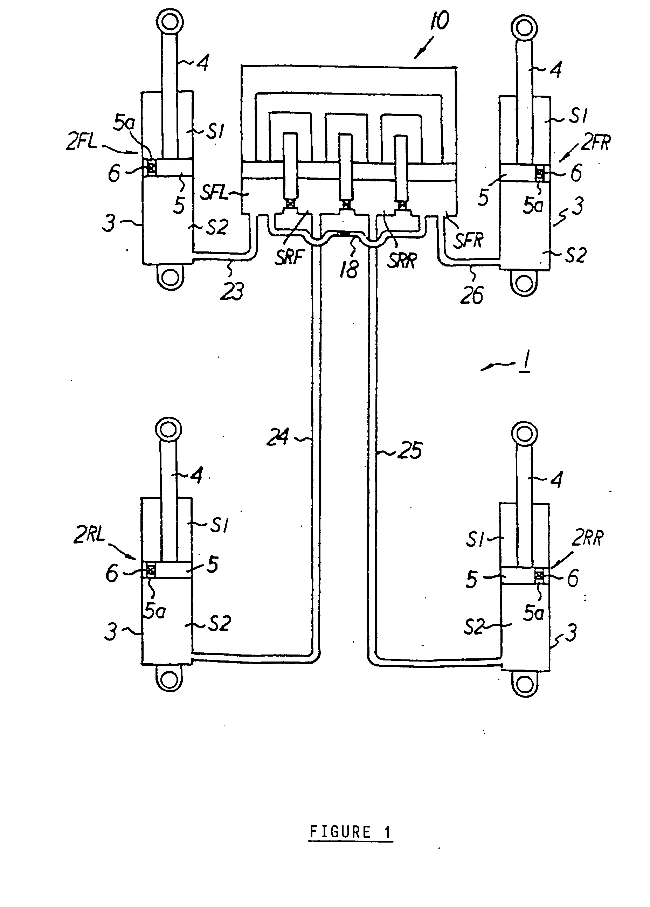

That is, Fig. 6 is a diagrammatic illustration of the construction of a conventional suspension for a four-wheeled vehicle; and Fig. 7 is a detailed sectional view of a pressure-regulating device of the suspension. A suspension 1' shown in Fig. 1 includes hydraulic shock absorbers for suspending wheels of the four-wheeled vehicle (that is, hydraulic shock absorbers 2FL', 2FR' for suspending left and right front wheels and hydraulic shock absorbers 2RL', 2RR' for suspending left and right rear wheels), and a pressure regulating device 10'.

The hydraulic shock absorbers 2FL', 2FR', 2RL', 2RR' are each arranged such that a piston 5' connected to the lower end of a piston rod 4' inserted from above into a cylinder 3', is fitted in the cylinder 3' for sliding movement; in the cylinder 3' are formed an upper oil chamber S1' and a lower oil chamber S2' defined by the piston 5' and filled with oil; and in an oil hole 5a' formed in the piston 5' is provided an orifice 6' as a choke member.

The pressure regulating device 10', as shown in Fig. 7 in detail, is provided with four oil chambers SFL', SRL', SRR', SFR' in communication with each other through communication passages 15', 16', 17', and four movable partition 13a', 13b', 13c', 13d' fitted in the oil chambers SFL', SRL', SRR', SFR' for sliding movement; and the movable partitions 13a'-13d' are connected by a connecting member 14' and adapted to slide in one body in a housing 11'. The interior of the housing 11' is divided by the movable partitions 13a'-13d' into the oil chambers SFL', SRL', SRR', SFR' and a gas chamber SG'; and the oil chambers SFL', SRL', SRR', SFR' are filled with oil and the gas chamber SG' contains inert gas.

In communication passages 15', 16', 17' through which communication is provided between adjacent oil chambers SFL' and SRL', between adjacent oil chambers SRL' and SRR', and between adjacent oil chambers SRR' and SFR', respectively, are provided orifices 19', 20', 21'; and the oil chambers SFL', SRL', SRR', SFR' are in communication, through oil paths 23', 24', 25', 26', with the lower oil chambers S2' of the hydraulic shock absorbers 2FL', 2RL', 2RR', 2FR', respectively.

The upper ends of the piston rods of the hydraulic shock absorbers 2FL', 2RL', 2RR', 2FR' are mounted to body members, and the lower ends of the cylinders 3' to wheels; and the cylinders 3' and the piston rods 4' of the hydraulic shock absorbers 2FL', 2RL', 2RR', 2FR' are extended and contracted in association with irregularities of the road surface, so that the pistons 5' slide in the cylinders 3', and the shock applied to wheels from the road surface is absorbed by the damping force generated by oil passing through the orifices 6' provided in the oil holes 5a' of the pistons 5'.

If the hydraulic shock absorbers 2RL', 2RR' on the left and right rear wheels are operated in the different directions, oil equivalent to volume changes of the cylinders 3' in association with the extending and retracting movement of the piston rods 4', flows mainly through the orifice 16' to thereby generate a damping force and this damping force is added to damping forces generated in the hydraulic shock absorbers 2RL', 2RR', so that operations of the left and right hydraulic shock absorbers 2RL', 2RR' in the different directions are restricted, preventing rolling of the vehicle body.

If the hydraulic shock absorbers 2FL', 2FR' on the front wheels and the hydraulic shock absorbers 2RL', 2RR' on the rear wheels are operated in the different directions, oil equivalent to volume changes of the cylinders 3' in association with the extending and retracting movement of the piston rods 4', flows mainly through the orifices 15', 17', to thereby generate damping forces and this damping forces are added to damping forces generated in the hydraulic shock absorbers 2FL', 2RL', 2RR', 2FR', so that operations of the hydraulic shock absorbers 2FL', 2FR' on the front wheel and the hydraulic shock absorbers 2RL', 2RR' on the rear wheel in the different directions are restricted, preventing pitching of the vehicle body.

However, in the conventional suspension 1' described above, no direct communication is provided between the oil chamber SFL' and the oil chamber SFR' and no orifice is provided between them, therefore when the hydraulic shock absorbers 2FL', 2FR' on the left and right front wheels are operated in the different directions, the additional damping force generated in the pressure regulating device 10' is small. As a result, the additional damping characteristic to rolling is different significantly between front and rear wheels, which makes it difficult to set a damping characteristic suited for an actual vehicle, and the additional damping characteristic to rolling on the front wheel side have an influence on the additional damping characteristic to pitching, which makes it impossible to set independent damping characteristics.

In view of the foregoing, it is an objective of this invention to provide an improved suspension device for a four-wheeled vehicle as indicated above capable of setting additional damping characteristics independently for pitching and rolling.

This objective is solved in an inventive manner by a suspension device having the features of claim 1.

Accordingly, there is provided a suspension device for a four-wheeled vehicle including hydraulic cylinders mounted, one for each wheel, to the four-wheeled vehicle, and a pressure regulating device having hydraulic chambers in communication with said hydraulic cylinders, and movable partitions fitted in the hydraulic chambers for sliding movement, wherein any individual of said hydraulic chambers in said pressure regulating device is in communication, through choke members, with two of said hydraulic chambers other than one of said hydraulic chambers, which is in communication with an hydraulic cylinder being located diagonal to an hydraulic cylinder which is in communication with said individual hydraulic chamber on a vehicle body.

Thus, two hydraulic chambers (oil chambers) in the pressure regulating device in communication with two hydraulic cylinders (oil cylinders provided on the left and right front wheels, left and right rear wheels, or wheels on the same side) other than one on a wheel disposed diagonal to any one hydraulic cylinder (oil cylinder) are in communication with each other through a choke member. Therefore, the additional damping characteristic to rolling and that to pitching can be set independently without interaction. In addition, the additional damping characteristic to rolling is not different significantly between front and rear wheels.

According to a preferred embodiment, the suspension device comprises four hydraulic chambers defined by partitions disposed in parallel in a housing, wherein four movable partitions are slidably fitted in the hydraulic chambers.

It is beneficial within this embodiment if the suspension device comprises communication passages arranged in the partitions and provided with orifices for establishing communication between adjacent hydraulic chambers and a communication passage provided with an orifice for establishing communication between the hydraulic chambers on both sides of the housing.

According to a further preferred embodiment, the suspension device comprises four movable partitions of different sectional areas disposed on the same axis and joined together by means of a connecting member, wherein four hydraulic chambers are defined by a housing and said partitions.

Accordingly, there are provided four movable partitions of different sectional areas which are disposed on the same axis and joined together, therefore deflection of the movable partitions due to pressure difference can be prevented and easy manufacturing of the device is effected.

It is preferable within this embodiment if the suspension device comprises communication passages are formed in three of said four movable partitions through which said hydraulic chambers are in communication with each other.

According to a further preferred embodiment, the suspension device comprises a communication passage provided in the connecting member adapted to provide communication between hydraulic chambers on opposite ends of the connecting member.

Accordingly, in the movable partitions disposed on the same axis and joined together, are formed communication passages through which oil chambers are in communication with each other, therefore the construction can be simplified, effecting size reduction of the device.

According to another preferred embodiment, the suspension device comprises two sets of two movable partitions, wherein the two movable partitions of each of the two sets are disposed on the same axis.

Within this embodiment, it is beneficial if the suspension device is provided with four hydraulic chambers defined by the movable partitions and a housing, wherein adjacent hydraulic chambers are in communication with each other through communication passages respectively comprising orifices.

Accordingly, two movable partitions are disposed as one set on the same axis and joined together, and two sets of the partitions are connected together in parallel, therefore the total length of the device can be decreased, effecting size reduction.

It is further beneficial if there is provided a connecting member connecting the two sets together in parallel.

It is also preferable is there are formed hydraulic chambers behind one of said partitions (13a,13d) of said two sets of partitions, one for each set of partitions, and said hydraulic chambers are respectively in communication with two hydraulic chambers defined by fifth and sixth movable partitions disposed on the same axis and joined together.

Accordingly, deflection of the movable partitions due to pressure difference can be prevented, and the degree of freedom in layout can be increased due to the possibility of decentralization of the device.

In the following, the present invention is explained in greater detail with respect to several embodiments thereof in conjunction with the accompanying drawings, wherein:
- Fig. 1: is a diagrammatic illustration of the construction of a suspension for a four-wheeled vehicle according to a first embodiment;
- Fig. 2: is a detailed sectional view of a pressure-regulating device of the suspension for a four-wheeled vehicle according to the first embodiment;
- Fig. 3: is a detailed sectional view of a pressure-regulating device of a suspension for a four-wheeled vehicle according to a second embodiment;
- Fig. 4: is a detailed sectional view of a pressure-regulating device of a suspension for a four-wheeled vehicle according to a third embodiment;
- Fig. 5: is a detailed sectional view of a pressure-regulating device of a suspension for a four-wheeled vehicle according to a fourth embodiment;
- Fig. 6: is a diagrammatic illustration of the construction of a conventional suspension for a four-wheeled vehicle; and
- Fig. 7: is a detailed sectional view of a pressure-regulating device of the conventional suspension for a four-wheeled vehicle.

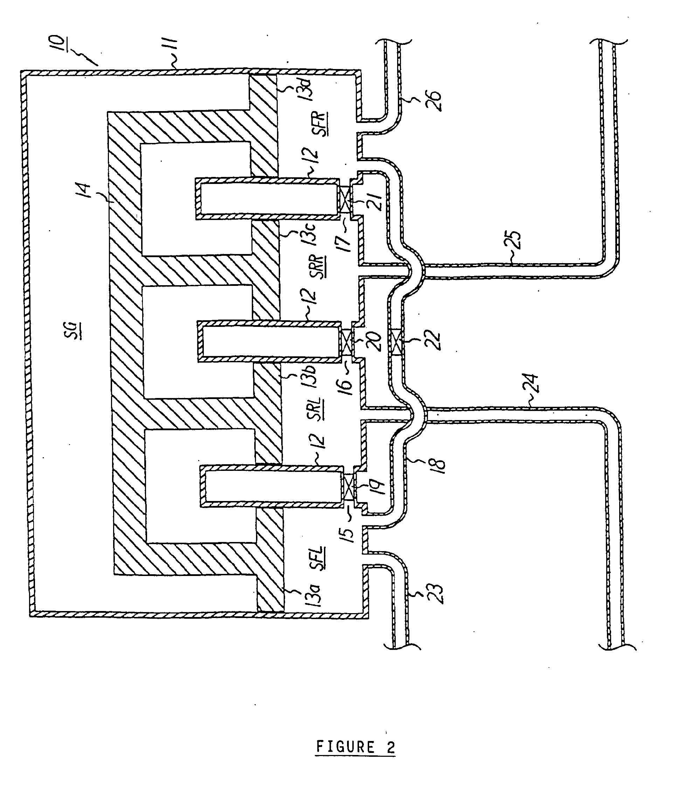

Fig. 1 is a diagrammatic illustration of the construction of a suspension for a four-wheeled vehicle according to this embodiment; and Fig. 2 is a detailed sectional view of a pressure-regulating device of the suspension.

A suspension for a four-wheeled vehicle shown in Fig. 1 includes hydraulic shock absorbers for suspending wheels of a four-wheeled vehicle (that is, hydraulic shock absorbers 2FL, 2FR for suspending left and right front wheels and hydraulic shock absorbers 2RL, 2RR for suspending left and right rear wheels), and a pressure-regulating device 10. In this embodiment, although hydraulic shock absorbers are adopted as oil cylinders (hydraulic cylinders) constituting the suspension for a four-wheeled vehicle according to this embodiment, the oil cylinders (hydraulic cylinders) may be damping cylinders provided separate from the hydraulic shock absorbers.

The hydraulic shock absorbers 2FL, 2FR, 2RL, 2RR are each arranged such that a piston 5 connected to the lower end of a piston rod 4 inserted from above into a cylinder 3, is fitted in the cylinder 3 for sliding movement; in the cylinder 3 are formed an upper oil chamber S1 and a lower oil chamber S2 defined by the piston 5 and filled with oil; and in an oil hole 5a formed in the piston 5 is provided an orifice 6 as a choke member.

The pressure regulating device 10, as shown in Fig. 2 in detail, is provided with four oil chambers (hydraulic chambers) SFL, SRL, SRR, SFR defined by partitions 12 and disposed in parallel in a housing 11, and four movable partitions 13a, 13b, 13c, 13d fitted in the oil chambers (hydraulic chambers) SFL, SRL, SRR, SFR for sliding movement; and the movable partitions 13a-13d are connected by a connecting member 14 and adapted to slide in one body in the housing 11. The interior of the housing 11 is divided by the movable partitions 13a-13d into the oil chambers (hydraulic chambers) SFL, SRL, SRR, SFR and a gas chamber SG; and the oil chambers (hydraulic chambers) SFL, SRL, SRR, SFR are filled with oil (hydraulic liquid) and the gas chamber SG contains inert gas.

The adjacent oil chambers SFL and SRL, adjacent oil chambers SRL and SRR, and adjacent oil chambers SRR and SFR are in communication with each other between paired chambers through communication passages 15, 16, 17, respectively, and the oil chamber SFL and the oil chamber SFR on both sides are in communication with each other through a communication passage 18; in the communication passages 15-18 are provided with orifices 19, 20, 21, 22 as choke members; and the oil chambers SFL, SRL, SRR, SFR are in communication, through oil paths 23, 24, 25, 26, with the lower oil chambers S2 of the hydraulic shock absorbers 2FL, 2RL, 2RR, 2FR, respectively.

In this embodiment as described above, the oil chamber SFL and the oil chamber SFR on both sides are in communication with each other through the communication passage 18 and in the middle of the communication passage 18 is provided the orifice 22. Therefore, two oil chambers in the pressure regulating device 10 in communication with two hydraulic shock absorbers (hydraulic shock absorbers supporting the left and right front wheels, left and right rear wheels, or wheels on the same side) other than one on a wheel disposed diagonal to any one hydraulic shock absorber, are in communication with each other through a choke member.

Specifically, the oil chamber SFL in communication, through the oil path 23, with the lower oil chamber S2 of the hydraulic shock absorber 2FL supporting the left front wheel, is in communication, through the communication passage 18 and the orifice 22, with the oil chamber SFR which is in communication, through the oil path 26, with the lower oil chamber S2 of the hydraulic shock absorber 2FR supporting the right front wheel; and it is also in communication, through the communication passage 15 and the orifice 19, with the oil chamber SRL which is in communication, through oil path 24, with the lower oil chamber S2 of the hydraulic shock absorber 2RL supporting the left rear wheel. Also, the oil chamber SRL in communication, through the oil path 24, with the lower oil chamber S2 of the hydraulic shock absorber 2RL supporting the left rear wheel, is in communication, through the communication passage 15 and the orifice 19, with the oil chamber SFL which is in communication, through the oil path 24, with the lower oil chamber S2 of the hydraulic shock absorber 2FL supporting the left front wheel; and it is also in communication, through the communication passage 16 and the orifice 20, with the oil chamber SRR which is in communication, through oil path 25, with the lower oil chamber S2 of the hydraulic shock absorber 2RR supporting the right rear wheel.

Also, the oil chamber SRR in communication, through the oil path 25, with the lower oil chamber S2 of the hydraulic shock absorber 2RR supporting the right rear wheel, is in communication, through the communication passage 16 and the orifice 20, with the oil chamber SRL which is in communication, through the oil path 24, with the lower oil chamber S2 of the hydraulic shock absorber 2RL supporting the left rear wheel; and it is also in communication, through the communication passage 17 and the orifice 21, with the oil chamber SFR which is in communication, through oil path 26, with the lower oil chamber S2 of the hydraulic shock absorber 2FR supporting the right front wheel.
Also, the oil chamber SFR in communication, through the oil path 26, with the lower oil chamber S2 of the hydraulic shock absorber 2FR supporting the right front wheel, is in communication, through the communication passage 18 and the orifice 22, with the oil chamber SFL which is in communication, through the oil path 23, with the lower oil chamber S2 of the hydraulic shock absorber 2FL supporting the left front wheel; and it is also in communication, through the communication passage 17 and the orifice 21, with the oil chamber SRR which is in communication, through oil path 25, with the lower oil chamber S2 of the hydraulic shock absorber 2RR supporting the right rear wheel.

The upper ends of the piston rods of the hydraulic shock absorbers 2FL, 2RL, 2RR, 2FR are mounted to body members, and the lower ends of the cylinders 3 to wheels; and when the hydraulic shock absorbers 2FL, 2RL, 2RR, 2FR are operated in the same direction by approximately the same amount of movement in association with irregularities of the road surface, the cylinders 3 and the piston rods 4 are extended and contracted, so that the pistons 5 slide in the cylinders 3, and the shock applied to wheels from the road surface is absorbed by the damping force generated by oil passing through the orifices 6 provided in the oil holes 5a of the pistons 5. In this case, although amounts of oil in the cylinders of the hydraulic shock absorbers 2FL, 2RL, 2RR, 2FR increase/decrease by as much quantity as volume changes of the cylinders 3 in association with the extending and retracting movement of the piston rods 4, the changes of the amounts of oil can be relieved by compression or expansion of the gas in the gas chamber SG caused by the sliding movement of the movable partitions 13a-13d in the pressure regulating device 10. In this case, an in-flow and an out-flow of the oil between the oil chambers SFL, SRL, SRR, SFR are very small and thus additional damping forces are hardly generated because of the oil scarcely passing through the orifices 19-22, so that the shock from the road surface can be absorbed mainly by the damping force generated in the hydraulic shock absorbers 2FL, 2RL, 2RR, 2FR.

On one hand, if the hydraulic shock absorbers 2FL, 2FR on the left and right front wheels are operated in the different directions, oil equivalent to volume changes of the cylinders 3 in association with the extending and retracting movement of the piston rods 4, flows mainly through the orifice 22 to thereby generate an additional damping force and this damping force is added to damping forces generated in the hydraulic shock absorbers 2FL, 2FR, so that operations of the left and right hydraulic shock absorbers 2FL, 2FR in the different directions are restricted, preventing rolling of the vehicle body. Similarly, if the hydraulic shock absorbers 2RL, 2RR on the left and right rear wheels are operated in the different directions, oil equivalent to volume changes of the cylinders 3 in association with the extending and retracting movement of the piston rods 4, flows mainly through the orifice 16 to thereby generate an additional damping force and this damping force is added to damping forces generated in the hydraulic shock absorbers 2FL, 2FR, so that rolling of the vehicle body is restricted by this damping force and damping forces generated in the hydraulic shock absorbers 2RL, 2RR.

On the other hand, if the hydraulic shock absorber 2FL on the left front wheel and the hydraulic shock absorber 2RL on the left rear wheel are operated in the different directions, oil equivalent to volume changes of the cylinders 3 in association with the extending and retracting movement of the piston rods 4, flows mainly through the orifice 15 to thereby generate an additional damping force and this damping force is added to damping forces generated in the hydraulic shock absorbers 2FL, 2RL, so that operations of the hydraulic shock absorber 2FL on the left front wheel and the hydraulic shock absorber 2RL on the left rear wheel in the different directions are restricted, preventing pitching of the vehicle body. Similarly, if the hydraulic shock absorber 2FR on the right front wheel and the hydraulic shock absorber 2RR on the right rear wheel are operated in the different directions, oil equivalent to volume changes of the cylinders 3 in association with the extending and retracting movement of the piston rods 4, flows mainly through the orifice 17 to thereby generate an additional damping force, so that pitching of the vehicle body is restricted by this damping force and damping forces generated in the hydraulic shock absorbers 2FR, 2RR.

In this embodiment as described above, two oil chambers in the pressure regulating device 10 in communication with two hydraulic shock absorbers (hydraulic shock absorbers supporting the left and right front wheels, left and right rear wheels, or wheels on the same side) other than one on a wheel disposed diagonal to any one hydraulic shock absorber, are in communication with each other through a choke member. Therefore, the additional damping characteristic to rolling and that to pitching can be set independently without interaction.

In addition, the additional damping characteristic to rolling is not different significantly between front and rear wheels, and by changing the characteristics of orifices, additional damping characteristics to pitching can be set separately for left and right wheels, as well as additional damping characteristics to rolling.

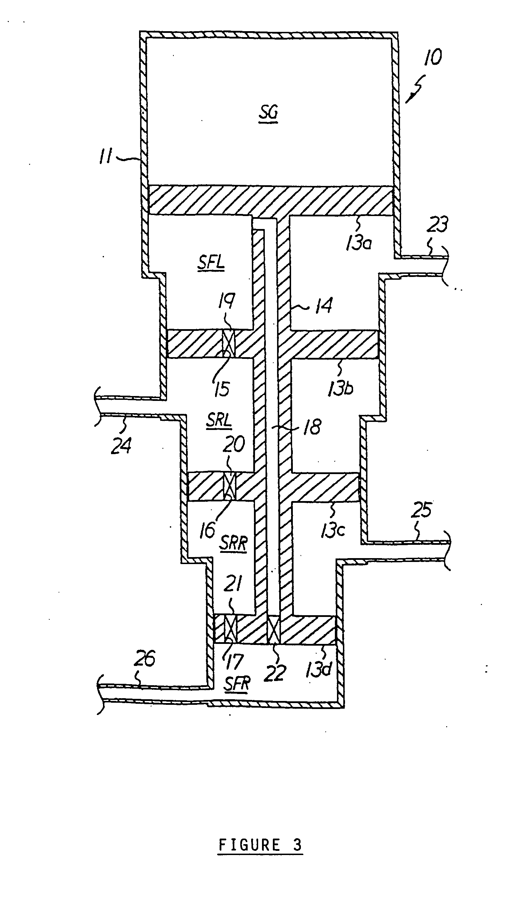

Now, referring to Fig. 3, a second embodiment will be described. Fig. 3 is a detailed sectional view of a pressure regulating device of a suspension for a four-wheeled vehicle according to this second embodiment, in which like elements as shown in Fig. 2 are designated by like numerals.

This second embodiment is characterized by four movable partitions 13a, 13b, 13c, 13d of different sectional areas disposed vertically on the same axis in a housing 11 and connected together by a connecting member 14; in the housing 11 are formed vertically four oil chambers SFL, SRL, SRR, SFR defined by the movable partitions 13a-13d; and in the housing 11 at the uppermost part is formed a gas chamber SG. The adjacent oil chambers SFL and SRL, adjacent oil chambers SRL and SRR and adjacent oil chambers SRR and SFR are in communication with each other between paired chambers through communication passages 15, 16, 17, respectively, and the uppermost oil chamber SFL and the lowermost oil chamber SFR through a communication passage 18; and in the communication passages 15-18 are provided orifices 19, 20, 21, 22 as choke members, respectively. The oil chambers SFL, SRL, SRR, SFR are in communication with oil chambers of the respective hydraulic shock absorbers through oil paths 23, 24, 25, 26, respectively.

In this embodiment, the four movable partitions 13a-13d are each formed in the shape of a disk, and the ratio of the sectional areas of the movable partitions 13a-13d is set at 4:3:2:1 so as to equalize the pressure receiving areas of the movable partitions. Movable partitions of different pressure receiving areas may be provided intentionally depending on the design requirement of the suspension.

Also in the suspension of this embodiment, two oil chambers in the pressure regulating device 10 in communication with two hydraulic shock absorbers (hydraulic shock absorbers supporting the left and right front wheels, left and right rear wheels, or wheels on the same side) other than one on a wheel disposed diagonal to any one hydraulic shock absorber, are in communication with each other through a choke member. Therefore, the same effect as in the foregoing first embodiment can be achieved, and in addition, as a result of the movable partitions 13a-13d being disposed on the same axis and joined together, deflection of the movable partitions 13a-13d due to pressure difference can be prevented and easy manufacturing of the device can be effected.

Further, in the movable partitions 13a-13d disposed on the same axis and joined together, are provided communication passages 15-17 and in the connecting member 14 a communication passage 18, therefore the construction is simplified, effecting size reduction of the device.

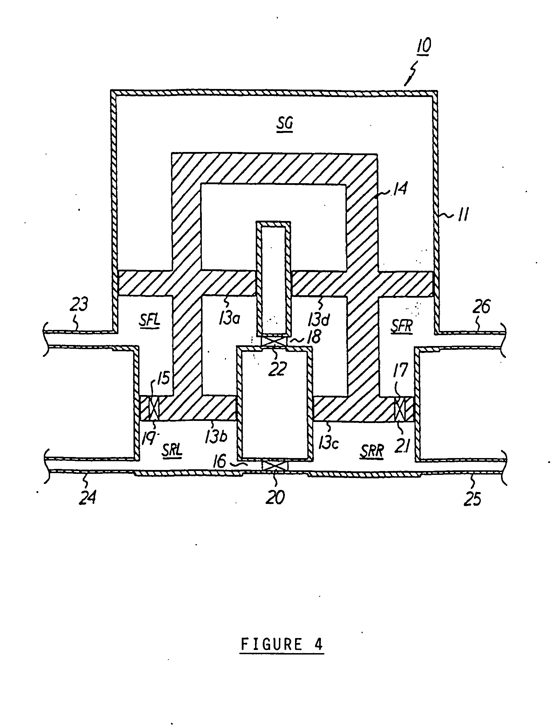

Now, referring to Fig. 4, a third embodiment will be described. Fig. 4 is a detailed sectional view of a pressure regulating device of a suspension for a four-wheeled vehicle according to this embodiment, in which like elements as shown in Fig. 2 are also designated by like numerals.

This embodiment is characterized in that two sets of two movable partitions 13a, 13b and two movable partitions 13c, 13d are each disposed on the same axis in a housing 11 of a pressure regulating device 10 and joined together, and these two sets of partitions are connected together in parallel by a connecting member 14; and in the housing 11 are formed four oil chambers SFL, SRL, SRR, SFR defined by movable partitions 13a-13d, and in the housing 11 at the uppermost part is formed a gas chamber SG. The adjacent oil chambers SFL and SRL, adjacent oil chambers SRL and SRR, adjacent oil chambers SRR and SFR, and oil chambers SFR and SFL, are in communication with each other between paired oil chambers through communication passages 15, 16, 17, 18, respectively, and in the communication passages 15-18 are provided orifices 19, 20, 21, 22, respectively. The oil chambers SFL, SRL, SRR, SFR are in communication with oil chambers of the respective hydraulic shock absorbers through oil paths 23, 24, 25, 26, respectively.

Also in the suspension of this embodiment, two oil chambers in the pressure regulating device 10 in communication with two hydraulic shock absorbers (hydraulic shock absorbers supporting the left and right front wheels, left and right rear wheels, or wheels on the same side) other than one on a wheel disposed diagonal to any one hydraulic shock absorber, are in communication with each other through a choke member. Therefore, the same effect as in the foregoing first embodiment can be achieved. In addition, in this embodiment, two sets of two movable partitions 13a, 13b and two movable partitions 13c, 13d are each disposed on the same axis and joined together, and these two sets of partitions are connected together in parallel, so that the total length of the device can be decreased, effecting size reduction.

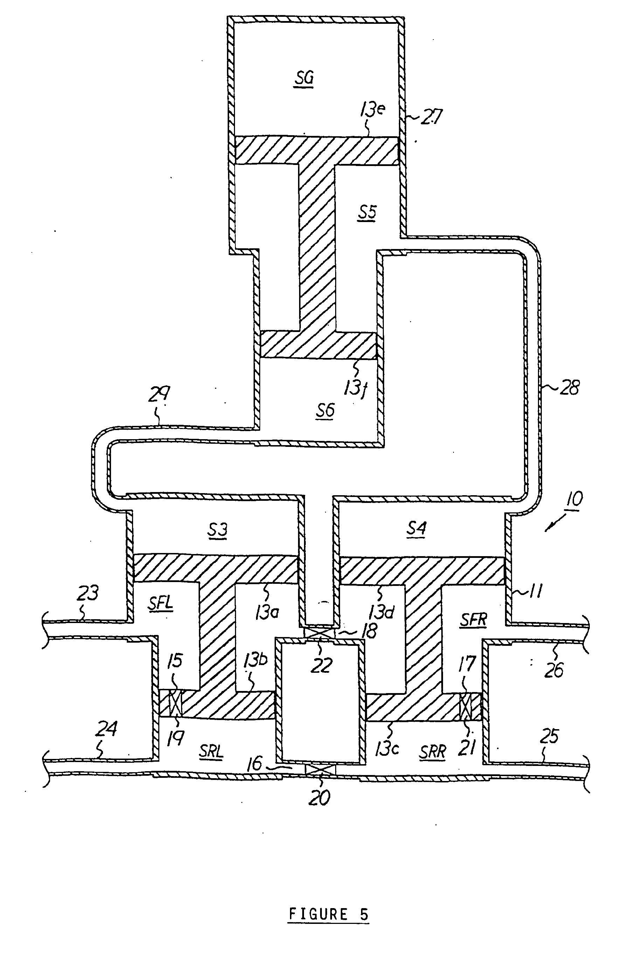

Now, referring to Fig. 5, a fourth embodiment will be described. Fig. 5 is a detailed sectional view of a pressure regulating device of a suspension for a four-wheeled vehicle according to this embodiment, in which like elements as shown in Fig. 4 are designated by like numerals.

This embodiment is characterized in that two sets of two movable partitions 13a, 13b and two movable partitions 13c, 13d are each disposed on the same axis in a housing 11 of a pressure regulating device 10 and joined together, and these two sets of partitions are arranged in parallel; behind the movable partitions 13a, 13d of the respective sets of partitions are formed oil chambers S3, S4, respectively; and the oil chambers S3, S4 are in communication, through oil paths 28, 29, with two upper and lower oil chambers S5, S6 defined by fifth and sixth movable partitions 13e, 13f disposed on the same axis in a cylinder 27 and joined together. In the cylinder 27 at the uppermost part is formed a gas chamber SG.

According to this embodiment, the same effect as in the foregoing third embodiment can be achieved, and in addition, the internal pressure of the oil chambers S3, S4 can be balanced, thereby preventing deflection of the partition walls 13a-13d due to pressure difference, and decentralization of the device can be effected by arranging the cylinder 27 separate from the housing 11, thereby increasing the degree of freedom in layout of the device.

As is clear from the foregoing description, according to the described embodiments, there is provided a suspension for a four-wheeled vehicle including oil cylinders mounted, one for each wheel, to the four-wheeled vehicle, and a pressure regulating device having oil chambers in communication with said oil cylinders, and movable partitions fitted in the oil chambers for sliding movement, wherein each of said oil chambers in said pressure regulating device is in communication, through choke members, with two oil chambers other than one in communication with an oil cylinder located diagonal to an oil cylinder corresponding to each of said oil chambers on a vehicle body. Therefore, additional damping characteristics can be set independently for pitting and rolling.

Thus, there is provided a suspension for a four-wheeled vehicle capable of setting additional damping characteristics independently for pitching and rolling, wherein said suspension for a four-wheeled vehicle comprises oil cylinders (hydraulic shock absorbers) 2FL, 2RL, 2RR, 2FR mounted, one for each wheel, to the four-wheeled vehicle, and a pressure regulating device 10 having oil chambers SFL, SRL, SRR, SFR in communication with the hydraulic shock absorbers 2FL, 2RL, 2RR, 2FR, and movable partitions fitted in the oil chambers SFL, SRL, SRR, SFR for sliding movement, wherein each of the oil chambers SFL, SRL, SRR, SFR in the pressure regulating device 10 is in communication, through orifices (choke members), with two oil chambers other than one in communication with an hydraulic shock absorber located diagonal to an hydraulic shock absorber corresponding to each of the oil chambers on a vehicle body.

According to a preferred embodiment, there is provided a suspension for a four-wheeled vehicle including oil cylinders mounted, one for each wheel, to the four-wheeled vehicle, and a pressure regulating device having oil chambers in communication with said oil cylinders, and movable partitions fitted in the oil chambers for sliding movement, wherein each of said oil chambers in said pressure regulating device is in communication, through choke members, with two oil chambers other than one in communication with an oil cylinder located diagonal to an oil cylinder corresponding to each of said oil chambers on a vehicle body.

It is preferable if four movable partitions of different sectional areas are disposed on the same axis and joined together.

It is further preferable if in said movable partitions are formed communication passages through which said oil chambers are in communication with each other.

It is also beneficial if two movable partitions are disposed as one set on the same axis and joined together, and two sets of said partitions are connected together in parallel.

Additionally, it is beneficial if behind one partitions of said two sets of partitions are formed oil chambers, one for each set, and said oil chambers are in communication with two oil chambers defined by fifth and sixth movable partitions disposed on the same axis and joined together, respectively.

## Claims

1. A suspension device for a four-wheeled vehicle including hydraulic cylinders (2FL,2FR,2RL,2RR) mounted, one for each wheel, to the four-wheeled vehicle, and a pressure regulating device (10) having hydraulic chambers (SFL,SFR,SRL,SRR) in communication with said hydraulic cylinders (2FL,2FR,2RL,2RR) and movable partitions (13a,13b,13c,13d) fitted in the hydraulic chambers (SFL,SFR,SRL,SRR) for sliding movement, **characterized in that**
any individual of said hydraulic chambers (SFL,SFR,SRL,SRR) in said pressure regulating device (10) is in communication, through choke members (15,16,17,18), with two of said hydraulic chambers (SFL,SFR,SRL,SRR) other than one of said hydraulic chambers (SFL,SFR,SRL,SRR) which is in communication with an hydraulic cylinder being located diagonal to an hydraulic cylinder which is in communication with said individual hydraulic chamber (SFL,SFR,SRL,SRR) on a vehicle body.

2. The suspension device for a four-wheeled vehicle according to claim 1, **characterized by** four hydraulic chambers (SFL,SFR,SRL,SRR) defined by partitions (12) disposed in parallel in a housing (11), wherein four movable partitions (13a,13b,13c,13d) are slidably fitted in the hydraulic chambers (SFL,SFR,SRL,SRR).

3. The suspension device for a four-wheeled vehicle according to claim 2, **characterized by** communication passages (15,16,17) arranged in the partitions (12) and provided with orifices (19,20,21) for establishing communication between adjacent hydraulic chambers (SFL,SRF and SRF,SRR and SRR,SFR) and a communication passage (18) provided with an orifice (22) for establishing communication between the hydraulic chambers on both sides (SFL,SFR) of the housing (11).

4. The suspension device for a four-wheeled vehicle according to claim 1, **characterized by** four movable partitions (13a,13b,13c,13d) of different sectional areas disposed on the same axis and joined together by means of a connecting member (14), wherein four hydraulic chambers (SFR,SRR,SRL,SFL) are defined by a housing (11) and said partitions (13a,13b,13c,13d).

5. The suspension device for a four-wheeled vehicle according to claim 4, **characterized in that** communication passages (15,16,17) are formed in three of said four movable partitions (13b,13c,13d) through which said hydraulic chambers (SFL,SFR,SRL,SRR) are in communication with each other.

6. The suspension device for a four-wheeled vehicle according to claim 4 or 5, **characterized by** a communication passage (18) provided in the connecting member (14) adapted to provide communication between hydraulic chambers (SFR,SFL) on opposite ends of the connecting member (14).

7. The suspension device for a four-wheeled vehicle according to claim 1, **characterized by** two sets of two movable partitions (13a,13b and 13c,13d), wherein the two movable partitions of each of the two sets are disposed on the same axis.

8. The suspension device for a four-wheeled vehicle according to claim 7, **characterized in that** four hydraulic chambers (SFL,SRL,SRR,SFR) are defined by the movable partitions (123a,13b,13c,13d) and a housing (11), wherein adjacent hydraulic chambers are in communication with each other through communication passages (15,16,17,18) respectively comprising orifices (19,20,21,22).

9. The suspension device for a four-wheeled vehicle according to claim 7 or 8, **characterized by** a connecting member (14) connecting the two sets together in parallel.

10. The suspension device for a four-wheeled vehicle according to claim 7 or 8, **characterized in that** behind one of said partitions (13a,13d) of said two sets of partitions (13a,13b and 13c,13d) are formed hydraulic chambers (S3,S4), one for each set of partitions (13a,13b and 13c,13d), and said hydraulic chambers (S3,S4) are respectively in communication with two hydraulic chambers (S5,S6) defined by fifth and sixth movable partitions (13e,13f) disposed on the same axis and joined together.
